# EUROPEAN PATENT SPECIFICATION

(11) **EP 0 283 304 B1**
(45) Date of publication and mention of the grant of the patent: **14.07.1993**
(21) Application number: 88302397.0
(22) Date of filing: 18.03.1988
(51) Int. Cl.: G11B 27/36, G11B 20/10

(54) **Optical disc reproduction apparatus**
Vorrichtung zur Wiedergabe von optischen Platten
Appareil de reproduction d'un disque optique

(30) Priority: 20.03.1987 JP 66431/87
(43) Date of publication of application: 21.09.1988
(73) Proprietor: MATSUSHITA ELECTRIC INDUSTRIAL CO., LTD., Kadoma-shi, Osaka-fu, 571 (JP)
(72) Inventor: Tomoda, Haruhisa Matsushita Elect. Ind. Co. Ltd., Osaka (JP); Shimada, Yasuomi Matsushita Elect. Ind. Co. Ltd., Osaka (JP)
(74) Representative: Crawford, Andrew Birkby

(56) References cited:
- DE-A- 3 428 048
- US-A- 4 301 480
- PATENT ABSTRACTS OF JAPAN vol. 9, no. 116 (P-357)(1839) 21 May 85;& JP-A-60 1661
- PATENT ABSTRACTS OF JAPAN vol. 6, no. 82 (P-116)(960) 20 May 82;& JP-A-57 18068

## Description

The present invention relates to an optical disc reproduction apparatus like a compact disc player for example.

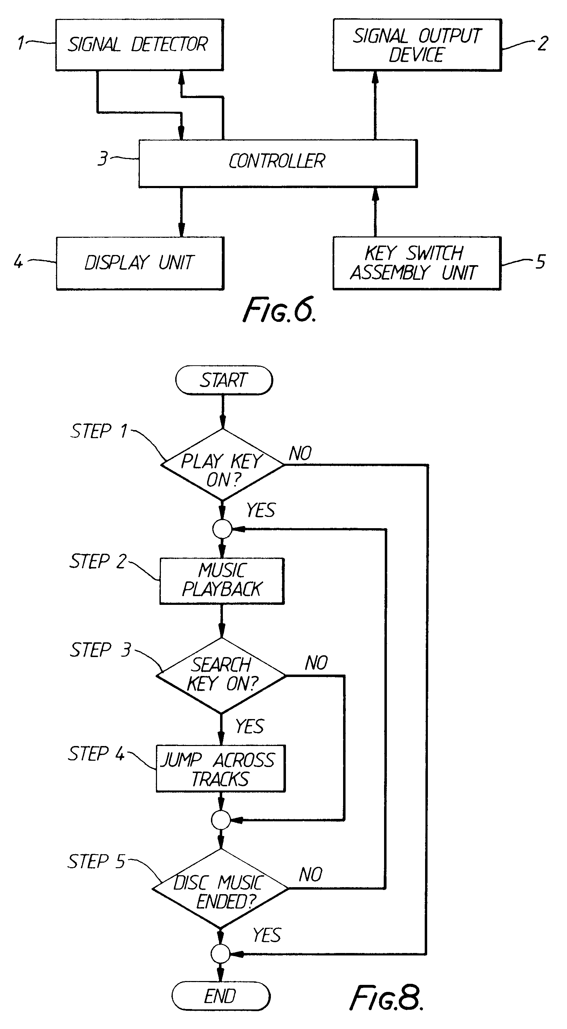

Any conventional optical disc player is provided with such typical constituents shown in FIGs 6 through 8 including the following: Signal detector 1 which is comprised of an optical pickup reading music information and music-playing time information recorded on an optical disc (which is hereinafter merely called a disc); signal output device 2 which processes music information road by the signal detector 1, and then converts it into audio signals before eventually outputting them; controller 3 which controls both the signal detector 1 and the signal output device 2; display unit 4 which displays information such as music-playing time read by the signal detector 1; and key-switch assembly unit 5 which is comprised of music play key 5a, forward search key 5b, backward search key 5c, etc. and instructs the controller 3 to start playing music or fast-forwarding and other operations of the optical pickup by allowing it to jump over tracks.

Typically, any conventional optical disc player executes control operations shown in the flowchart which appears in FIG. 8 using those constituents mentioned above. The controller 3 identifies during step 1 whether the play key 5a is depressed, or not. If the play key 5a were already depressed, then, step 2 is entered. If the play key 5a were not depressed, this routine process is terminated. When step 2 is entered, while display unit 4 still displays music-playing time information read by the signal detector 1, the signal output device 2 outputs music signals so that the disc player can play music. When step 3 is entered, the controller identifies whether search keys 5b and 5c are depressed, or not. If neither of these keys were depressed, then step 5 is entered. When step 4 is underway, the controller 3 compulsorily causes the optical pickup following up signals to jump across tracks in the direction of the outer circumference or the inner circumference of the disc. When step 5 is underway, the controller identifies whether the optical pick up has reached the end of the music signals recorded on the disc, or not. If the optical pickup is already at the end of music signals, this routine process is then terminated. If the optical pickup is not yet at the end of music signals, the routine process returns to step 2 to cause the disc player to sequentially repeat step 2 through 5 until the optical pickup eventually reaches the end of music signals recorded on the disc.

Nevertheless, any of those conventional optical disc players having the above constitution is obliged to execute extremely complex processes to determine the recording input level when recording music signals recorded on the disc with a magnetic recording apparatus.

In particular, in order to properly determine the recording input level, the magnetic recording apparatus needs to detect the highest level of music signals recorded on the disc (which is hereinafter merely called the peak level). To detect the peak level, conventionally, the operator causes the optical pickup to move forward itself fast by depressing search key while the disc still plays back music, and then, he detects the peak level by either listening to music himself or by watching the level meter by transmitting music signals to the magnetic recording apparatus before he can eventually adjust the recording input level by replaying the detected portion. This in turn obliges the operator to perform extremely inconvenient operations.

### BRIEF SUMMARY OF THE INVENTION

The present invention overcomes those problems mentioned above by providing a novel optical disc reproduction apparatus which automatically detects the peak level and allows the peak-level music signal to pause itself at the recorded position, and yet, eventually outputs the peak-level music signals.

To achieve these objects, the present invention provides an optical disc reproduction apparatus comprising:
a signal detector which detects music-playing position information and music signals recorded on the optical disc;
a signal output device which outputs those signals detected by said signal detector ; and
a controller for automatically detecting the highest level of signals recorded on the disc, the controller comprising:
signal-level input means which receives music signal levels;
a peak-level memory which stores the peak level of the music signal levels;
a peak-level position memory which stores the position at which the peak level signal is recorded;
comparison means which executes comparison of the signal level stored in said peak-level memory with the signal level received by signal input means ;
renewal means which renews the value of peak-level memory and the value of peak-level position memory in accordance with the result of comparison executed by said comparison means; and
a reference value memory which stores predetermined distance reference values;
wherein the controller is activatable in a coarse-search mode to perform a coarse-search for peak signal level, a fine-search mode to perform a fine-search for peak signal level and a pause mode to repeatedly output the recorded signal having the detected peak level, and further comprises:
a peak-level-detecting operation unit which computes a peak-level fine-search starting position and a peak-level fine-search completing position from the reference values stored in said reference value memory and the peak-level position stored in said peak-level position memory in the coarse-search mode and also computes a peak-level pause position from the peak-level position detected in the fine-search mode and also from the reference values stored in said reference-value memory;
fine-search starting position memory which stores those values computed by said peak-level-detecting operation unit;
fine-search completing position memory; and
pause-position memory.

The optical disc reproduction apparatus related to the invention features the constitution mentioned above and provides extremely advantageous functions which are summarized below.

While causing the optical pickup to jump itself across a certain number of tracks, the optical disc recording apparatus related to the invention continuously receives music signal levels recorded on the disc, and at the same time, it compares the input signal level to the preceding signal levels stored in memory, and then stores the signal value whichever the greater in memory. Then, the optical disc reproduction apparatus again causes the optical pickup to jump itself across a certain number of tracks to repeatedly compare the stored signal levels to the newly input signal level before automatically detecting the exact position at which the peak level is recorded. The apparatus related to the invention then enters into pause condition while still activating the signal output device to output music signals at the peak-level detected position. As a result, the operator can easily and precisely adjust the recording input level of the magnetic recording apparatus as required.

Features and advantages of the present invention will become apparent from the description of a preferred embodiment given by way of example with reference to the accompanying drawings, in which:-
Fig. 1 is the simplified schematic block diagram of a preferred embodiment of the optical disc reproduction apparatus related to the invention;
Fig. 2 is the simplified schematic block diagram denoting the essential constituents of the optical disc reproduction apparatus related to the invention;
Fig. 3 is the simplified external view of the optical disc reproduction apparatus related to the invention;
Fig. 4 is the operation flowchart denoting the routine processes for automatically detecting the peal level of input music signals;
Fig. 5 is the plane view explaining the fine-search mode and the pose condition;
Fig. 6 is the simplified schematic block diagram of a conventional optical disc reproduction apparatus;
Fig. 7 is the simplified external view of the conventional optical disc reproduction apparatus shown in Fig. 6; and
Fig. 8 is the operation flowchart denoting the routine processes executed by the conventional optical disc reproduction apparatus shown in Figs. 6 and 7.

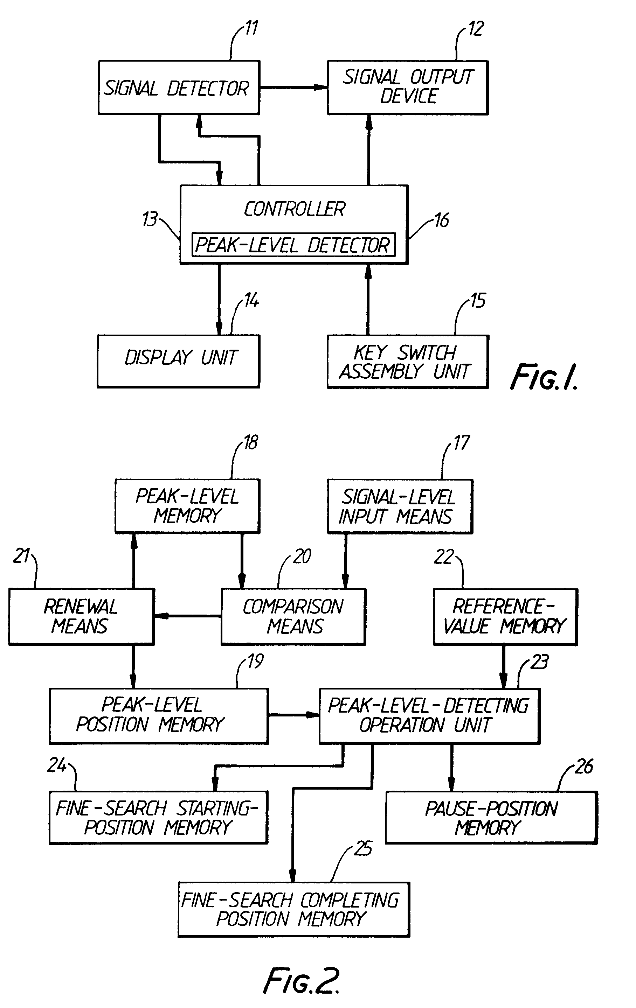

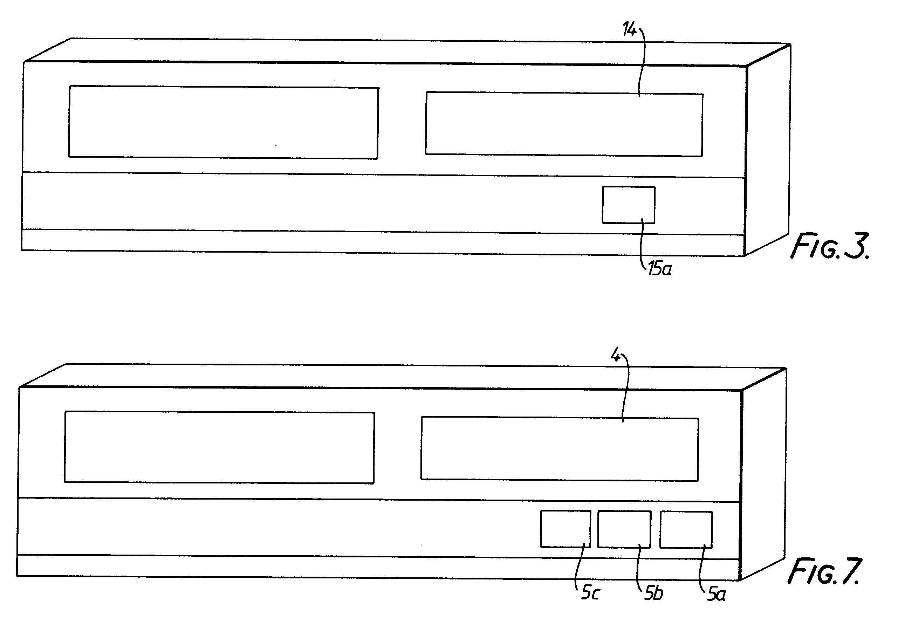

Referring now more particularly to the accompanying drawings in Figs. 1 through 3, a preferred embodiment of the optical disc reproduction apparatus related to the invention is described below.

The optical disc reproduction apparatus related to the invention features the provision of the following constituents: signal detector 11 and signal output device 12 each having operating functions identical to those of any conventional signal detector and signal output device; controller 13 which controls the signal detector 11 and the signal output device 12, while the peak-level detector 16 described below is installed to internal part of the controller 13; display unit 14 which displays visual information such as music-playing time and others; and key switch assembly unit 15 including peak-level search key 15a instructing the controller 13 to automatically detect the peak level of the input music signals and other functional keys.

The peak-level detector 16 is substantially comprised of the following: Signal level input means which transmits the music signal levels recorded on the disc and detected by the signal detector 11 to the controller 13; peak level memory 18 which stores the peak value of signal levels received from signal input means; peak-level position memory 19 which stores the specific disc position at which the peak level is recorded; comparison means which compares the new signal level received from signal input means with the preceding peak value stored in the peak level memory 18; renewal means 21 which renews those values of the peak level memory 18 and the peak-level position memory 19 in the case in which the newly input signal level were determined to be higher than the preceding peak levels stored in those memories 18 and 19 by comparison means 20; reference value memory 22 which stores the predetermined reference values a through c; peak-level-detecting operation unit 23 which computes those values needed for detecting the peak level from those which are stored in the peak-level position memory 19 and the reference values stored in the reference value memory 22; fine-search starting position memory 24 which stores the peak-level fine-search starting position generated by the subtraction of the reference value a from the value of the peak-level position memory 19 stored under the activated peak-level coarse-search mode after allowing the peak-level-detecting operation unit 23 to execute the subtraction; fine-search completing position memory 25 which stores the peak-level fine-search completing position generated by addition of the reference value b; and the pause position memory 26 which stores the peak-level pause position generated by the addition of the reference value c to the value of the peak-level position memory 19 stored under the activated peak-level fine-search mode, respectively.

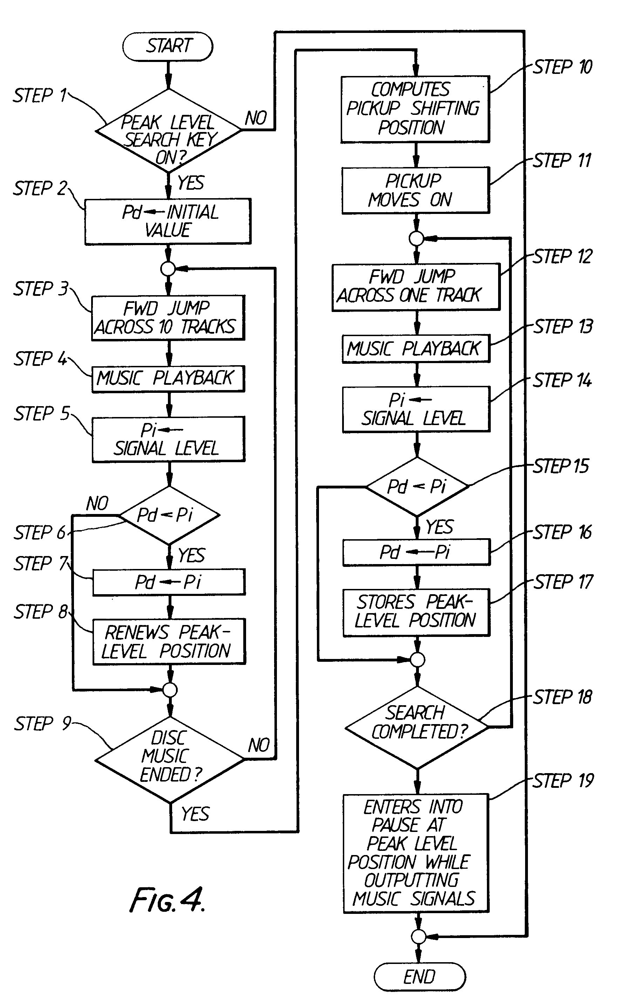

Next, referring now to the operation flowchart shown in FIG. 4, functional operations of the optical disc reproduction apparatus featuring the above constitution are described below.

First, when step 1 is entered, the controller 3 identifies whether the peak-level search key 15a is depressed, or not. If this key were already depressed, step 2 is entered. If this key were not depressed, then step 2 is terminated without executing any process. When step 2 is entered, the controller 13 allows the initial value to be stored in the peak-level memory 18 (the value stored in the peak-level memory 18 is hereinafter merely called Pd). Next, when step 3 is entered, the controller 13 first causes the optical pick up to compulsorily jump itself across 10 tracks in the direction of the outer circumference of the disc, and then, as soon as step 4 is entered, the signal detector 11 detects music signals recorded at the position at which the optical pickup has just landed, thus causing the signal output device 12 to output the detected music signals. Next, when step 5 is entered, the music signal level detected in process of step 4 is input to the controller 13 to allow the input signal level to become Pi. When step 6 is entered, comparison means 20 executes comparison between Pd and Pi, and if the value of Pi were higher than that of Pd, then step 7 is entered. If the value Pi were not higher than Pd, then step 9 is entered. On the other hand, while step 7 is still underway, renewal means 21 renews the value stored in the peak level memory 18 into the value which was delivered to the controller 13 while step 5 was underway. Likewise, when step 8 is still underway, renewal means 21 also renews the value stored in the peak-level position memory 24 into the position at which a music signal of a specific level input in process of step 5 remains recorded. Next, when step 9 is entered, the controller 13 identifies whether the optical pickup has already reached the end of music signals recorded on the disc, or not. If the optical pickup were already at the end of music signals, then step 10 is entered. If the optical pickup were not yet at the end of music signals, then the routine process returns to step 3, and then repeatedly follows up execution of steps 3 through 9 until the optical pickup eventually reaches the end of music signals on the disc. These steps 3 through 9 constitute the peak-level coarse-search mode, in which the system roughly detects the peak levels of music signals throughout the entire track of the disc.

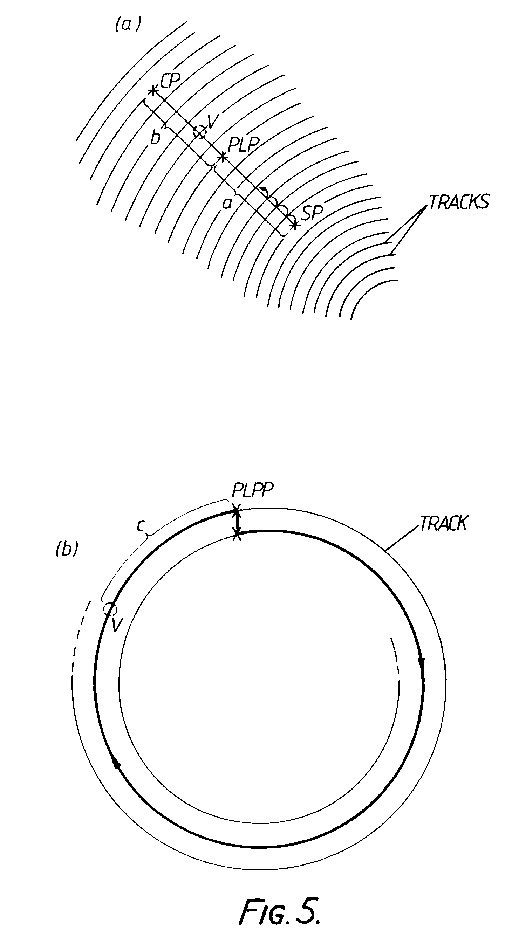

Next, when step 10 is entered, in order to precisely search peak levels of music signals on the disc, the peak-level-detecting operation unit 23 subtracts the reference value a from the peak-level position (PLP) stored under the peak-level coarse-search mode so that the peak-level fine-search starting position (SP) can eventually be determined, and then stores the determined position in the fine-search starting position memory 24 (See FIG 5 (a)). The peak-level-detecting operation unit 23 then adds the reference value b to the peak-level position (PLP) to determine the peak-level fine-search completing position (CP), which is then stored in the peak-level fine-search completing position memory 25. Though in FIG. 5 (a) the reference values a, b are given as track numbers, the reference values a, b can be given as the time corresponding to certain music-playing time information on the track. When step 11 is entered, the controller 13 then causes the optical pickup to move itself up to the position being stored in the fine-search starting position memory 24. Next, when step 12 is entered, the controller 13 causes the optical pickup to compulsorily jump itself across one track in the direction of the outer circumference of the disc. The optical disc reproduction apparatus then executes processes related to steps 13 through 17. Since these processes are identical to those which are executed in process of steps 4 through 8, explanation of step 13 through 17 is deleted. Next, when step 18 is entered, the controller 13 identifies whether the optical pickup has already reached the position stored in the peak-level fine-search completing position memory 25, or not. If the optical pickup is already at the designated position, then step 19 is activated. If the optical pickup were not yet at the designated position, then the routine process returns to step 12, and then repeatedly executes steps 12 through 18 until the optical pickup eventually reaches the fine-search completing position. These steps 12 through 18 substantially constitute the peak-level fine-search mode. Consequently, the optical disc reproduction apparatus related to the invention securely detects more accurate peak-level position by repeating fine-searching of those regions close to the position at which the peak-level signal sought by the peak-level coarse search mode is recorded. When step 19 is entered, the peak-level pause position (PLPP) is determined by adding the reference value c to the value (v) of the peak-level position memory 19 stored under the peak-level fine-search mode, and then, the peak-level pause position is stored in the pause-position memory 26. The controller 13 then causes the optical pickup to more up to the position stored in the pause-position memory 26 so that the optical pickup can enter into pause condition to complete the entire loop operations (See FIG 5 (b)).

The pause condition represents the state of repeatedly executing those routine processes described above, in which the controller 13 causes the optical pickup to compulsorily jump itself across one track in the direction of the inner circumference of the disc, and then allows the signal output device 12 to output music signals detected by the signal detector 11 from the position at which the optical pickup has landed, and then, as soon as the optical pickup reaches the position stored in the pause-position memory 26, the controller 13 again causes the optical pickup to compulsorily jump itself across one track in the direction of the inner circumference of the disc. While these sequential routine processes are executed, music signal are continuously output.

The above preferred embodiment allows the pause condition to exist for a period of time in which the optical pickup jumps itself across one track and again jumps itself across one track in the direction of the inner circumference of the disc. However, the above preferred embodiment also allows the optical disc reproduction apparatus related to the invention to repeatedly play back music during a specific period of time corresponding to m-seconds before and after arrival at the peak-level position by allowing the optical pickup to jump itself across n-pieces (where n is optional) of track.

According to the above preferred embodiment, when the operator adjusts the recording input level for recording music signals from an optical disc using a magnetic recording apparatus, by allowing the operator to merely depress the peak-level search key, the optical disc reproduction apparatus related to the invention repeatedly execute those operations including comparison of the newly input signal levels from the disc with the preceding peak-level value before storing the gretater signal level in memory while causing the optical pickup to move itself in the direction of the outer circumference of the disc. As a result, the optical disc reproduction apparatus related to the invention automatically detects the position at which the peak-level music signal is recorded on the disc and then enters into pause condition at the peak-level position while continuously outputting music signals, thus allowing the operator to easily and precisely adjust the recording input level.

As is clear from the above description, the optical disc reproduction apparatus related to the invention incorporates the following constituents including; signal detector which detects music-playing time information and music signals recorded on the disc; signal output device which outputs those signals detected by the signal detector; signal-level input means which inputs music signal levels; peak-level memory which stores the peak level of music signals; peak-level position memory which stores the position at which the peak level signal is recorded; comparison means which executes comparison of the signal level stored in the peak level memory with the signal level input by signal input means; renewal means which renews the value of the peak level memory and the value of the peak level position memory in accordance with the result of comparison executed by comparison means; reference value memory which stores the predetermined reference values; peak-level-detecting operation unit which computes the peak-level fine-search starting position and the peak-level fine-search completing position for detecting more accurate peak level position from the reference values stored in the reference value memory and the peak level position stored in the peak level position memory by activating peak level coarse-search mode and also computes the peak level pause position from the peak level position detected by activating peak-level fine-search mode and also from the reference values stored in the reference value memory; fine-search starting position memory which stores those values computed by the peak-level-detecting operation unit, fine-search completing position memory; and pause position memory, respectively.

When the operator adjusts the recording input level before recoding music signals from an optical disc with a magnetic recording apparatus, the optical disc reproduction apparatus related to the invention automatically detects the peak level position and enters into pause condition merely by depressing the peak-level search key, and as a result, the operator can very easily and precisely adjust the recording input level of the magnetic recording apparatus.

## Claims

1. An optical disc reproduction apparatus comprising:
a signal detector (11) which detects music-playing position information and music signals recorded on the optical disc;
a signal output device (12) which outputs those signals detected by said signal detector (11); and
a controller (13) for automatically detecting the highest level of signals recorded on the disc, the controller comprising:
signal-level input means (17) which receives music signal levels;
a peak-level memory (18) which stores the peak level of the music signal levels;
a peak-level position memory (19) which stores the position at which the peak level signal is recorded;
comparison means (20) which executes comparison of the signal level stored in said peak-level memory (18) with the signal level received by signal input means (17);
renewal means (21) which renews the value of peak-level memory (18) and the value of peak-level position memory (19) in accordance with the result of comparison executed by said comparison means (20); and
a reference value memory (22) which stores predetermined distance reference values;
wherein the controller (13) is activatable in a coarse-search mode to perform a coarse-search for peak signal level, a fine-search mode to perform a fine-search for peak signal level and a pause mode to repeatedly output the recorded signal having the detected peak level, and further comprises:
a peak-level-detecting operation unit (23) which computes a peak-level fine-search starting position and a peak-level fine-search completing position from the reference values stored in said reference value memory (22) and the peak-level position stored in said peak-level position memory (19) in the coarse-search mode and also computes a peak-level pause position from the peak-level position detected in the fine-search mode and also from the reference values stored in said reference-value memory (22);
fine-search starting position memory (24) which stores those values computed by said peak-level-detecting operation unit (23);
fine-search completing position memory (25); and
pause-position memory (26).

2. The optical disc reproduction apparatus in accordance with Claim 1, wherein said predetermined reference values are substantially comprised of three kinds including reference value (a) which is used for determining said peak-level fine-search starting track number (SP) by subtracting said reference value (a) from the peak-level position (PLP) detected by activating said peak-level coarse-search mode, reference value (b) which is used for determining said peak-level fine-search completing track number (CP) by adding said reference value (b) to said peak-level position (PLP), and reference value (c) which is used for determining said peak-level pause position (PLPP) by adding said reference value (c) to said detected peak-level position (V) by activating said peak-level fine search mode.

3. The optical disc reproduction apparatus in accordance with Claim 1, wherein said pause condition is entered at said peak-level pause position computed by said peak-level-detecting operation unit while said signal output device continuously outputs music signals.

4. The optical disc reproduction apparatus in accordance with Claim 1, wherein said apparatus repeatedly plays back music signals for a specific duration corresponding to m-seconds, where m can optionally be set, before and after detecting a new peak level.

5. An optical disc reproduction apparatus in accordance with Claim 1, wherein the controller (13) controls execution of peak-level coarse search mode, detecting the peak level of music signals on the entire surface or in an optional region of the optical disc and the position at which said peak-level is recorded, by executing repeated comparisons and renewals of the peak-levels of music signals using said signal-level input means, comparison means, and renewal means whenever the optical pickup jumps across several tracks covering the entire surface or an optional region, and also execution of peak-level fine search mode detecting more accurate peak-level position of music signals before and behind the position at which said detected peak-level is recorded in response to the result of detecting operations executed by said peak-level coarse search mode.

## Patentansprüche

1. Wiedergabevorrichtung für optische Platten, umfassend:
einen Signaldetektor (11), der auf der Platte aufgezeichnete Musikwiedergabepositionsinformation und Musiksignale ermittelt;
eine Signalausgabeeinrichtung (12), die die von dem Signaldetektor (11) ermittelten Signale ausgibt; und
eine Steuereinheit (13) zum automatischen Ermitteln des höchsten Pegels auf der Platte aufgezeichneter Signale, wobei die Steuereinheit umfaßt:
Signalpegeleingabeeinrichtung, (17) die Musiksignalpegel empfängt;
einen Spitzenpegelspeicher (18), der den Spitzenpegel der Musiksignalpegel speichert;
einen Spitzenpegelpositionsspeicher (19), der die Position speichert, bei der das Spitzenpegelsignal aufgezeichnet ist;
Vergleichseinrichtung (20), die einen Vergleich des in dem Spitzenpegelspeicher (18) gespeicherten Signalpegels mit dem von der Signaleingabeeinrichtung (17) empfangenen Signalpegel ausführt;
Erneuerungseinrichtung (21), die den Wert des Spitzenpegelspeichers (18) und den Wert des Spitzenpegelpositionsspeichers (19) in Übereinstimmung mit dem Ergebnis des von der Vergleichseinrichtung (20) ausgeführten Vergleichs erneuert; und
einen Referenzwertspeicher (22), der vorbestimmte Abstandsreferenzwerte speichert;
worin die Steuereinheit (13) in einem Grobsuchmodus, um ein Grobsuchen des Spitzensignalpegels durchzuführen, in einem Feinsuchmodus, um ein Feinsuchen des Spitzensignalpegels durchzuführen, und in einem Pausenmodus, um das aufgezeichnete Signal mit dem ermittelten Spitzenpegel wiederholt auszugeben, aktivierbar ist, und weiter umfaßt:
eine Spitzenpegelermittlungs-Funktionseinhelt (23), die eine Spitzenpegelfeinsuch-Startposition und eine Spitzenpegelfeinsuch-End-position aus in den in dem Referenzwertspeicher (22) gespeicherten Referenzwerten und der im Grobsuchmodus in dem Spitzenpegelpositionsspeicher (19) gespeicherten Spitzenpegelposition berechnet, und die ferner eine Spitzenpegelpausenposition aus der im Feinsuchmodus ermittelten Spitzenpegelposition und auch aus den in dem Referenzwertspeicher (22) gespeicherten Referenzwerten berechnet;
Feinsuchstartpositionsspeicher 24), der die von der Spitzenpegelermittlungs-Funktionseinheit (23) berechneten Werte speichert;
Feinsuchendpositionsspeicher (25); und
Pausenpositionsspeicher (26).

2. Wiedergabevorrichtung für optische Platten nach Anspruch 1, worin die vorbestimmten Referenzwerte im wesentlichen aus drei Arten, einschließlich Referenzwert (a), der zur Bestimmung der Spitzenpegelfeinsuch-Startspurnummer (SP) durch Subtrahieren des Referenzwerts (a) von der durch Aktivieren des Spitzenpegelgrobsuchmodus ermittelten Spitzenpegelposition (PLP) verwendet wird, Referenzwert (b), der zur Bestimmung der Spitzenpegelfeinsuch-Endspurnummer (CP) durch Addieren des Referenzwerts (b) zu der Spitzenpegelposition (PLP) verwendet wird, und Referenzwert (c), der zur Bestimmung der Spitzenpegelpausenposition (PLPP) durch Addieren des Referenzwerts (c) zu der durch Aktivieren des Spitzenpegelfeinsuchmodus ermittelten Spitzenpegelposition (v) verwendet wird, bestehen.

3. Wiedergabevorrichtung für optische Platten nach Anspruch 1, worin der Pausenzustand bei der von der Spitzenpegelermittlungs-Funktionseinheit berechneten Spitzenpegelpausenposition eingegangen wird, während die Signalausgabeeinrichtung fortlaufend Musiksignale ausgibt.

4. Wiedergabevorrichtung für optische Platten nach Anspruch 1, worin die Vorrichtung wiederholt Musiksignale für eine bestimmte, m Sekunden entsprechende Dauer, worin m optional gesetzt werden kann, vor und nach Ermittlung eines neuen Spitzenpegels wiedergibt.

5. Wiedergabevorrichtung für optische Platten nach Anspruch 1, worin die Steuereinheit (13) die Ausführung des Spitzenpegelgrobsuchmodus, der den Spitzenpegel von Musiksignalen auf der ganzen Oberfläche oder in einem optionalen Bereich der optischen Platte und die Position, bei der der Spitzenpegel aufgezeichnet ist, durch Ausführen wiederholter Vergleiche und Erneuerungen der Spitzenpegel von Musiksignalen unter Verwendung der Signalpegeleingabeeinrichtung, Vergleichseinrichtung und Erneuerungseinrichtung, wann immer der optische Abnehmer über mehrere, die ganze Oberfläche oder einen optionalen Bereich umfassende Spuren springt, ermittelt, und ferner die Ausführung des Spitzenpegelfeinsuchmodus, der die Spitzenpegelposition von Musiksignalen vor und hinter der Position, bei der der ermittelte Spitzenpegel aufgezeichnet ist, als Reaktion auf das Ergebnis von den durch den Spitzenpegelgrobsuchmodus ausgeführten Ermittlungsvorgängen genauer ermittelt, steuert.

## Revendications

1. Appareil de lecture de disque optique, comprenant :
un détecteur de signaux (11) qui détecte une information de position de lecture de musique et des signaux de musique enregistrés sur le disque optique ;
un dispositif de sortie de signaux (12) qui délivre en sortie les signaux détectés par ledit détecteur de signaux (11) ; et
un dispositif de commande (13) servant à détecter automatiquement le plus haut niveau des signaux enregistrés sur le disque, le dispositif de commande comprenant :
un moyen d'entrée de niveaux de signaux (17) qui reçoit des niveaux de signaux de musique ;
une mémoire de niveau de crête (18) qui mémorise le niveau de crête parmi les niveaux de signaux de musique ;
une mémoire de position de niveau de crête (19) qui mémorise la position à laquelle le signal de niveau de crête est enregistré ;
un moyen de comparaison (20) qui effectue la comparaison du niveau de signal mémorisé dans ladite mémoire de niveau de crête (18) avec le niveau de signal reçu par le moyen d'entrée de signaux (17) ;
un moyen de renouvellement (21) qui renouvelle la valeur de la mémoire de niveau de crête (18) et la valeur de la mémoire de position de niveau de crête (19) en fonction du résultat de la comparaison effectuée par ledit moyen de comparaison (20) ; et
une mémoire de valeurs de référence (22) qui mémorise des valeurs de référence de distance prédéterminées ;
où le dispositif de commande (13) peut être activé dans un mode de recherche grossière pour effectuer une recherche grossière du niveau de signal de crête, dans un mode de recherche fine pour effectuer une recherche fine du niveau de signal de crête et dans un mode pause pour délivrer à répétition le signal enregistré ayant le niveau de crête détecté, et comprend en outre :
une unité (23) servant à effectuer la détection du niveau de crête qui calcule une position de début de recherche fine de niveau de crête et une position de fin de recherche fine de niveau de crête à partir des valeurs de référence mémorisées dans ladite mémoire de valeurs de référence (22) et à partir de la position de niveau de crête mémorisée dans ladite mémoire de position de niveau de crête (19) dans le mode de recherche grossière et qui calcule également une position de pause de niveau de crête à partir de la position de niveau de crête détectée dans le mode de recherche fine et aussi à partir des valeurs de référence mémorisées dans ladite mémoire de valeurs de référence (22) ;
une mémoire de position de début de recherche fine (24) qui mémorise les valeurs calculées par ladite unité effectuant la détection du niveau de crête (23) ;
une mémoire de position de fin de recherche fine (25) ; et
une mémoire de position de pause (26).

2. Appareil de lecture de disque optique selon la revendication 1, où lesdites valeurs de référence prédéterminées sont sensiblement constituées de trois types de valeur, comprenant une valeur de référence (a) que l'on utilise pour déterminer le numéro de piste de début de recherche fine de niveau de crête (SP) en soustrayant ladite valeur de référence (a) de la position de niveau de crête (PLP) détectée par l'action dudit mode de recherche grossière de niveau de crête, une valeur de référence (b) que l'on utilise pour déterminer le numéro de piste de fin de recherche fine de niveau de crête (CP) en ajoutant ladite valeur de référence (a) à ladite position de niveau de crête (PLP), et une valeur de référence (c) que l'on utilise pour déterminer ladite position de pause de niveau de crête (PLPP) en ajoutant ladite valeur de référence (c) à ladite position de niveau de crête détectée (V) par l'action dudit mode de recherche fine de niveau de crête.

3. Appareil de lecture de disque optique selon la revendication 1, où ledit état de pause est introduit à la position de pause de niveau de crête qui est calculée par ladite unité effectuant la détection de niveau de crête tandis que ledit dispositif de sortie de signaux délivre de façon continue des signaux de musique.

4. Appareil de lecture de disque optique selon la revendication 1, où ledit appareil reproduit à répétition des signaux de musique pendant une durée particulière correspondant à m secondes, où m peut être fixé au choix, avant et après la détection d'un nouveau niveau de crête.

5. Appareil de lecture de disque optique selon la revendication 1, où le dispositif de commande (13) commande l'exécution du mode de recherche grossière de niveau de crête, qui détecte le niveau de crête de signaux de musique sur toute la surface ou dans une région choisie du disque optique et la position à laquelle ledit niveau de crête est enregistré, en exécutant des comparaisons et des renouvellement répétés des niveaux de crête des signaux de musique à l'aide dudit moyen d'entrée de niveaux de signaux, dudit moyen de comparaison et dudit moyen de renouvellement à chaque fois que le capteur optique saute plusieurs pistes couvrant toute la surface ou une région choisie, et aussi l'exécution du mode de recherche fine de niveau de crête, qui détecte une position de niveau de crête plus précise des signaux de musique avant et après la position à laquelle ledit niveau de crête détecté est enregistré en fonction du résultat des opérations de détection exécutées par ledit mode de recherche grossière de niveau de crête.
